# EUROPÄISCHE PATENTANMELDUNG

(11) **EP 0 657 341 A1**
(43) Veröffentlichungstag der Anmeldung: **14.06.1995**
(21) Anmeldenummer: 94114577.3
(22) Anmeldetag: 16.09.1994
(51) Int. Cl.: B62D 21/18, E02F 9/08

(54) **Hinterrahmen für knickgelenkte Baumaschinen**

(30) Priorität: 03.12.1993 DE 4341286
(71) Anmelder: O&K ORENSTEIN & KOPPEL AG, D-13581 Berlin (DE)
(72) Erfinder: Weissbach, Thomas, D-86152 Augsburg (DE)

(57) **Zusammenfassung**

Ein Hinterrahmen für knickgelenkte Baumaschinen ist aus in Rahmenlängsrichtung sich erstreckenden, tragende Bauteile bildenden Flächenelementen (18,19) gebildet, die mittels quer dazu verlaufenden weiteren Flächenelementen (20,21,22,23,24) miteinander verbunden sind. Zusammengesetzt ergibt sich eine Grundstruktur in Form eines geschlossenen bzw. durch Baugruppen wie Motorhaube oder Fahrerhaus verschließbaren Kastens.

## Beschreibung

Die Erfindung betrifft einen Hinterrahmen für knickgelenkte Baumaschinen, insbesondere für Radlader, Raddozer, Kompaktoren oder dgl., der zur Aufnahme angrenzender Maschinenteile bzw. Baugruppen aus in Rahmenlängsrichtung sich erstreckenden Bauteilen gebildet ist, die mittels quer dazu verlaufenden weiteren Bauteilen miteinander verbindbar sind.

Die DE-C 29 05 528 betrifft ein Fahrzeug, insbesondere einen Schaufellader, mit wenigstens einer Lenkachse und verschwenkbaren Hinterrädern und mit einem starren, aus Längs- und Querträgern zusammengesetzten Rahmen, welcher Fahrzeugaufbau und Motor trägt, einen zwischen den Rädern nach unten geführten mittleren Rahmenabschnitt aufweist und im wesentlichen aus einem äußeren Rahmenteil und einem teilweise zwischen dessen seitlichen Längsträgern verlaufenden inneren Rahmenteil besteht, wobei sich der äußere Rahmenteil portalartig über die Hinterräder des Fahrzeuges und der innere einen oder zwei Längsträger umfassende Rahmenteil zwischen den Achsen der Vorder- und der Hinterräder erstreckt. Im Bereich des mittleren Rahmenabschnittes sind beide Rahmenteile in Bodenhohe des Fahrerplatzes angeordnet. Der Motor ist innerhalb des äußeren Rahmenteils hinter den Hinterrädern einerseits auf Auflagern am hinteren Ende des inneren Rahmenteils und andererseits auf Auflagern am hinteren Ende des äußeren Rahmenteils gelagert. Auch wenn hier kein knickgelenktes Baufahrzeug gegeben ist, so wird die Anordnung von Längs- und Querträgern vielfach auch bei derartigen Fahrzeugen zum Einsatz gebracht. Nachteilig ist hier festzustellen, daß infolge dieser lamellenartigen Bauweise eine quasi punktförmige Krafteinleitung in die Rahmenseitenwände resultiert, die zur Erlangung der notwendigen Steifigkeit des Rahmens eine entsprechende Dimensionierung der Bauteile vonnöten macht. Ferner nachteilig ist festzustellen, daß infolge der Trägerbauweise des Rahmens die Kapselung des Motors verhältnismäßig aufwendig durchgeführt werden muß.

Ziel des Erfindungsgegenstandes ist es, einerseits zur Optimierung der Lastverteilung an der Gesamtmaschine sowie zur Vereinfachung des Handlings im Fertigungsprozeß das Bauteilgewicht des Hinterrahmens zu reduzieren und andererseits zur Verbesserung der Umweltverträglichkeit der Maschine eine optimierte Kapselung des Antriebsaggregates herbeizuführen.

Dieses Ziel wird erfindungsgemäß dadurch erreicht, daß sowohl die längs als auch die quer dazu verlaufenden Bauteile als Flächenelemente ausgebildet sind, die zusammengesetzt eine eine linienförmige Einbindung der Bauteile ermöglichende Grundstruktur in Form eines geschlossenen bzw. durch Maschinenteile, angrenzende Baugruppen oder dgl. Bauteile verschließbaren Kastens ergeben.

Vorteilhafte Weiterbildungen des Erfindungsgegenstandes sind den Unteransprüchen zu entnehmen.

In der vorliegenden Lösung wird als Grundstruktur des Hinterrahmens ein aus Flächenelementen (Scheiben) zusammengesetzter geschlossener Kasten gewählt. Dieser ist so ausgebildet, daß die Einleitung der äußeren Kräfte an Ecken (Hinterachs- und Fahrerhauslagerung) bzw. an Kanten (Knickgelenk) des Kastens erfolgt. Die in Längsrichtung des Hinterrahmens verlaufenden seitlichen Flächenelemente sind analog zu den quer dazu verlaufenden als tragende Bauteile ausgeführt. Aufgrund der linienförmigen Einbindung aller Flächenelemente stellen sich sämtliche Querschnitte des Hinterrahmens als zusammengesetzte Querschnitte mit einem insgesamt höheren Flächenträgheitsmoment dar. Dies ermöglicht, bei gleicher Tragfähigkeit der Konstruktion sowie Verwendung gleicher Werkstoffe und Anwendung gleicher Fertigungsverfahren wie bei herkömmlichen aus Längs- und Querträgern gebildeten Konstruktionen, eine erhebliche Reduzierung des Bauteilgewichtes um bis zu 25 %.

Ferner ist der gesamte Hinterrahmen so gestaltet, daß er das Antriebsaggregat (Getriebe, Wandler, Pumpen, Motor, usw.) der Baumaschine weitestgehend umhüllt, und wo dies nicht der Fall ist bzw. nicht möglich ist, mit ebenen Flanschflächen versehen ist, die einen dichtenden Anschluß angrenzender Maschinenteile bzw. Baugruppen ermöglichen. Durch diese Maßnahme wird eine gegenüber dem St.d.T. optimierte Schalldämpfung herbeigeführt.

Von weiterem Vorteil ist, daß infolge der geschlossenen Struktur des Hinterrahmens diese bei Leckage von in ihr angeordneten Komponenten als Auffangwanne dient. Darüber hinaus werden infolge der vollständigen Kapselung neben einer nicht unerheblichen Senkung der Geräuschemission auch Umwelteinflüsse vom gesamten Antriebsstrang ferngehalten, so daß es sich hier unter Umständen anbietet, die notwendigen Schmierstellen in lebensdauergeschmierter Bauart, d.h. wartungsarm bis wartungsfrei, gesehen auf die Standzeit der Baumaschine, auszuführen.

Die Flächenelemente des Hinterrahmens übernehmen sowohl eine Trag- als auch eine Verkleidungsfunktion. Funktionsbedingte Öffnungen in den Flächenelementen des Hinterrahmens sind derart angeordnet, daß die Tragfunktion der Flächenelemente nicht beeinträchtigt wird und die Öffnungen mit geringem Aufwand dichtend verschlossen werden können. Konstruktionsbedingte Öffnungen für Bauteile, die aus dem Inneren des Hinterrahmens ins Freie ragen (Gelenkwellen, Lenkzylinder, Schlauchleitungen oder dgl.) können durch geeignete konstruktive Maßnahmen entweder ganz vermieden oder minimiert werden.

Durch die beschriebene Gestaltung des Hinterrahmens ist es möglich, wie bereits dargelegt, sein Bauteilgewicht erheblich zu reduzieren und damit die Lastverteilung am Gesamtgerät zu optimieren. Gleichzeitig wird durch die Formgebung des Hinterrahmens der Aufwand an Verkleidungsteilen für die Kapselung des Antriebsaggregates erheblich minimiert, ohne daß sich der Herstellungsaufwand desselben erhöht.

Der Erfindungsgegenstand ist anhand eines Ausführungsbeispieles in der Zeichnung dargestellt und wird wie folgt beschrieben. Es zeigen:
- Figur 1 -: Prinzipskizze eines knickgelenkten Radladers samt Antriebsaggregat im Bereich des Hinterrahmens
- Figur 2 -: räumliche Darstellung des erfindungsgemäßen Hinterrahmens des Radladers gemäß Figur 1.

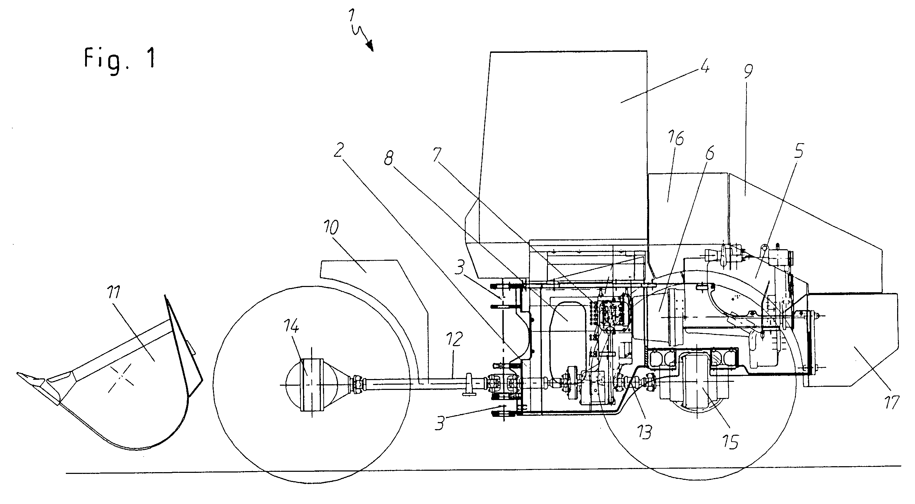

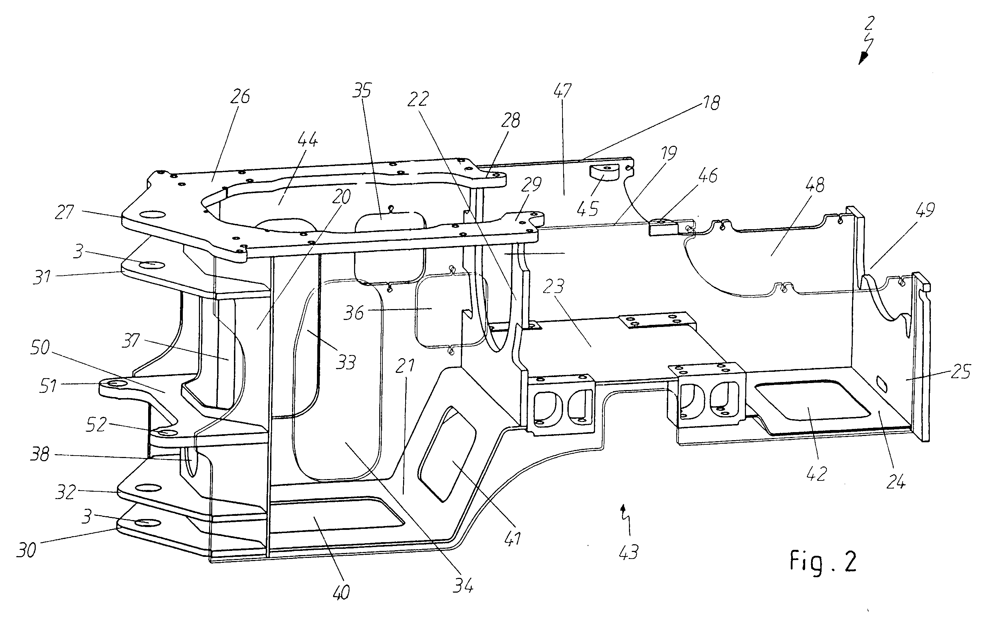

Figur 1 zeigt einen knickgelenkten Radlader 1, der im wesentlichen folgende Komponenten beinhaltet:
einen Hinterrahmen 2, ein angedeutetes Knickgelenk 3, ein auf dem Hinterrahmen 2 befestigtes Fahrerhaus 4, ein aus Motor 5, Wandler 6, Getriebe 7 und Pumpen 8 gebildetes Antriebsaggregat sowie eine Motorhaube 9. Über das Knickgelenk 3 steht der Hinterrahmen 2 mit einem nur angedeuteten Vorderrahmen 10 in Verbindung, an welchem wiederum über eine nicht weiter dargestellte Hebemechanik eine Schaufel 11 befestigt ist. Am Getriebeausgang sind Gelenkwellen 12,13 vorgesehen, die einerseits mit der Vorderachse 14 und andererseits mit der Hinterachse 15 des Radladers 1 verbunden sind. Der Hinterrahmen 2 nimmt darüber hinaus auch noch die Baugruppen Hydraulikölbehälter 16 und Gegengewicht 17 auf. Der konstruktive Aufbau des Hinterrahmens 2 des knickgelenkten Radladers 1 ist in Figur 2 veranschaulicht.

Figur 2 zeigt in räumlicher Darstellung den als Kasten ausgebildeten Hinterrahmen 2 des hier nicht weiter dargestellten knickgelenkten Radladers 1 gemäß Figur 1. Der Hinterrahmen 2 besteht aus in Längsrichtung sich erstreckenden seitlichen Flächenelementen 18,19 sowie quer dazu verlaufenden, in unterschiedlichen horizontalen und/oder vertikalen Ebenen und/oder geneigt dazu verlaufenden eine linienförmige Einbindung ermöglichenden Flächenelementen 20,21,22,23,24 sowie einer Rückwand 25. Zur Aufnahme des Fahrerhauses 4 gemäß Figur 1 ist oberhalb der seitlichen Flächenelemente 18,19 ein zum großen Teil umlaufender Flansch 26 vorgesehen, der in seinem vorderen Bereich 27 einen Teil des hier nur angedeuteten Knickgelenkes 3 bildet. Die freien Enden 28,29 des Flansches 26 sind hierbei aufeinader zu gerichtet. Gleiches gilt für das im unteren Bereich der seitlichen Flächenelemente 18,19 angeordnete, abgewinkelte, quer verlaufende Flächenelement 21, das in seinem vorderen Bereich 30 einen weiteren Teil des Knickgelenkes 3 bildet. An der Vorderwand 20 sind knickgelenkseitig weiteren Flächenelemente 31,32 angeschweißt, wobei die hier nicht weiter dargestellten Gelenkteile des Knickgelenkes 3 zwischen den Flächenelementen 27,31 sowie 30,32 vorgesehen sind. Sowohl die seitlichen 18,19 als auch die quer dazu verlaufenden Flächenelemente 20-24 sind mit funktionsbedingten Öffnungen 33,34,35,36,37,38,39,40,41,42 versehen (nur beispielhaft angedeutet). So sind die Öffnungen 33,34 zum Zwecke der Wartung der im Hinterrahmen 2 vorgesehenen, in Figur 1 veranschaulichten Aggregate, wie z.B. der Hydraulikpumpe(n) 8 sowie des Getriebes 7. Die Öffnungen 35,36 können zur Wartung bzw. Diagnose des hydraulischen Steuerblocks des Radladers 1, die Öffnung 37 zum Durchtritt von energieführenden Leitungen (z.B. Hydraulikschläuche) zum Vorderwagen 10, die Öffnungen 38,41 zum Durchtritt der Gelenkwellen 12,13, die Öffnung 39 zur Aufnahme des Wandlers 6 vorgesehen werden. Die weiteren Öffnungen 40 und 42 sind für den Ölablaß einerseits des Getriebes 7 und andererseits des Motors 5 in den zugehörigen quer verlaufenden Flächenelementen 21 und 24 eingebracht. Die Öffnungen 33-42 sind hierbei dergestalt angeordnet, daß eine Schwächung der sie umgebenden Querschnitte sicher vermieden wird. Die seitlichen Flächenelemente 18,19 verjüngen sich hierbei vom Knickgelenk 3 nach hinten in Richtung der Rückwand 25, wobei im verjüngten Bereich 43 die Hinterachse 15 befestigt wird. Das in Figur 1 dargestellte, aus Motor 5, Wandler 6, Getriebe 7 und Pumpen 8 bestehende Antriebsaggregat wird nach erfolgter Vormontage der Flächenelemente 18-25 als ein zusammenhängendes Bauteil in den nach oben noch offenen Hinterrahmen 2 eingesetzt und mit den zugehörigen Elementen verbunden. Anschließend können beispielsweise die Baugruppen Fahrerhaus 4, Hydraulikölbehälter 16 und Gegengewicht 17 montiert werden, wobei das Fahrerhaus 4 auf den im wesentlichen umlaufenden Flansch 26 aufgesetzt wird und somit den größten Teil des darunterliegenden offenen Bereiches 44 verschließt. Der Hydraulikölbehälter 16 schließt sich unmittelbar an das Fahrerhaus 4 an und wird auf die Elemente 28,29 des Flansches 26 sowie die Ansätze 45,46 der seitlichen Flächenelemente 18,19 gesetzt und mit diesen verbunden, wobei ein weiterer nach oben offener Bereich 47 verschlossen wird. Der verbleibende, den Motor 5 aufnehmende Bereich 48 wird durch die Motorhaube 9 dicht verschlossen, wobei seitlich hier nicht weiter dargestellte Radkästen an die seitlichen Flächenelemente 18,19 angeschraubt werden. Die Rückwand 25 ist mit einer nach oben offenen Ausnehmung 49 versehen, in die das Gegengewicht 17 eingehängt wird und somit auch dieser Bereich verschlossen ist. Die verbleibenden seitlichen 33-36, nach vorn 37,38 sowie nach unten weisenden Öffnungen 40-42 sind nach erfolgter Montage des Radladers 1 durch hier nicht weiter dargestellte Abschlußelemente, wie Deckel, Kraftstoffbehälter, Gelenkwellen oder dgl. Bauteile, dichtend verschließbar, so daß eine rundum gekapselte kastenförmige Gesamtstruktur gebildet wird. Durch diese Maßnahme wird neben einer nicht unerheblichen, dem Umweltschutz dienenden Geräuschreduzierung auch ein möglicher Austritt von Leckageflüssigkeiten sicher vermieden, wobei die innenliegenden Baugruppen, wie z.B. Motor 5, Wandler 6, Getriebe 7, Pumpe(n) 8, Gelenkwellen 12,13 oder dgl. vor äußeren Umwelteinflüssen geschützt werden. Die Wartungsintervalle können verlängert werden, was sich letztendlich positiv in einer erhöhten Verfügbarkeit der Maschine niederschlägt. Um weitere bisher übliche Ausnehmungen, insbesondere im Bereich des quer verlaufenden Flächenelementes 20 zum Durchtritt von Lenkzylindern (nicht dargestellt) zu vermeiden, ist ein weiteres Bauteil 50 vorgesehen, das Augen 51,52 aufweist, die zur Lagerung des einen Endes der Lenkzylinder dienen, wobei sich die Lenkzylinder dann in Richtung des Vorderwagens 10 erstrecken und dort an entsprechenden Bauteilen befestigt werden.

## Patentansprüche

1. Hinterrahmen für knickgelenkte Baumaschinen, insbesondere für Radlader, Raddozer, Kompaktoren oder dgl., der zur Aufnahme angrenzender Maschinenteile bzw. Baugruppen aus in Rahmenlängsrichtung sich erstreckenden Bauteilen gebildet ist, die mittels quer dazu verlaufenden weiteren Bauteilen miteinander verbindbar sind, dadurch gekennzeichnet, daß sowohl die längs (18,19) als auch die quer dazu verlaufenden Bauteile (20-24) als Flächenelemente ausgebildet sind, die zusammengesetzt eine eine linienförmige Einbindung der Bauteile (18-24) ermöglichende Grundstruktur in Form eines geschlossenen bzw. durch Maschinenteile (12,13), angrenzende Baugruppen (4,16,17) oder dgl. Bauteile verschließbaren Kastens (2) ergeben.

2. Hinterrahmen nach Anspruch 1, dadurch gekennzeichnet, daß sowohl die in Längsrichtung als auch die quer dazu verlaufenden Flächenelemente (18-24) als tragende Teile ausgebildet sind.

3. Hinterrahmen nach den Ansprüchen 1 und 2, dadurch gekennzeichnet, daß die quer verlaufenden Flächenelemente (20-24) in unterschiedlichen Ebenen zwischen den in Längsrichtung verlaufenden Flächenelementen (18,19) angeordnet sind.

4. Hinterrahmen nach den Ansprüchen 1 bis 3, dadurch gekennzeichnet, daß die quer verlaufenden Flächenelemente (20-24) horizontal und/oder vertikal und/oder geneigt zwischen den in Längsrichtung verlaufenden Flächenelementen (18,19) angeordnet sind.

5. Hinterrahmen nach den Ansprüchen 1 bis 4, dadurch gekennzeichnet, daß einerseits die in Längsrichtung und andererseits zumindest Teile der quer dazu verlaufenden Flächenelemente (18-24) mit funktionsbedingten Öffnungen (33,34,35,36,37,38,39,40,41,42), Ausschnitten oder dgl. zum Durchtritt von energieführenden Leitungen, Maschinenteilen (12,13) oder dgl. bzw. zur Aufnahme von Baugruppen (6) vorgesehen sind, die im Anschluß an die Montage derselben dichtend verschließbar sind.

6. Hinterrahmen nach den Ansprüchen 1 bis 5, dadurch gekennzeichnet, daß die in Längsrichtung verlaufenden Flächenelemente (18,19) einstückig ausgebildet sind und im Bereich des Knickgelenkes (3) zur Aufnahme der Fahrerkabine (4) einen zumindest teilweise umlaufenden Flansch (26) aufweisen.

7. Hinterrahmen nach den Ansprüchen 1 bis 6, dadurch gekennzeichnet, daß der Flansch (26), einen Teil (27) des Knickgelenkes (3) bildend, sich über einen vorgegebenen Bereich beider in Längsrichtung verlaufender Flächenelemente (18,19) erstreckt, wobei die Endbereiche (28,29) des Flansches (26) aufeinander zu gerichtet sind.

8. Hinterrahmen nach den Ansprüchen 1 bis 7, dadurch gekennzeichnet, daß sich der Hydraulikölbehälter (16) an das Fahrerhaus (4) anschließt und sich einerseits im Bereich der Enden (28,29) und andererseits an Ansätzen (45,46) an den seitlichen Flächenelementen (18,19) abstützt.

9. Hinterrahmen nach den Ansprüchen 1 bis 8, dadurch gekennzeichnet, daß die Flächenelemente (18-24) räumlich so zueinander angeordnet sind, daß sie den gesamten, insbesondere aus Motor (5), Wandler (6), Getriebe (7) und Pumpen (8) bestehende, vormontierten Antriebsstrang weitestgehend umhüllen und in den Bereichen, wo dies nicht der Fall ist, ebene Flanschflächen vorgesehen sind, die einen dichtenden Anschluß angrenzender Maschinenteile bzw. Baugruppen (5) ermöglichen.

10. Hinterrahmen nach den Ansprüchen 1 bis 9, dadurch gekennzeichnet, daß sich die in Längsrichtung erstreckenden Flächenelemente (18,19), vom Knickgelenk (3) ausgehend, nach hinten verjüngen, wobei der verjüngte Bereich (43) im wesentlichen hinter der Fahrerkabine (4) angeordnet ist.

11. Hinterrahmen nach den Ansprüchen 1 bis 10, dadurch gekennzeichnet, daß das Flächenelement (23) zur Stabilisierung der Hinterachslagerung vorgesehen ist.

12. Hinterrahmen nach den Ansprüchen 1 bis 11, dadurch gekennzeichnet, daß der verjüngte Bereich (43) im wesentlichen die Komponente Motor (5) aufnimmt und dieser Bereich durch eine Motorhaube (9) dichtend verschließbar ist.

13. Hinterrahmen nach den Ansprüchen 1 bis 12, dadurch gekennzeichnet, daß der Bereich unterhalb der Fahrerkabine (4) zur Aufnahme weiterer Antriebselemente, wie insbesondere Getriebe (7), Pumpen (8) oder dgl., vorgesehen ist und die Öffnungen (38,41) für den Durchtritt von Maschinenteilen, wie Gelenkwellen (12,13) oder dgl., mittels Deckeln oder Lagerelementen dichtend verschließbar sind.
